# EUROPÄISCHE PATENTSCHRIFT

(11) **EP 1 237 031 B1**
(45) Veröffentlichungstag und Bekanntmachung des Hinweises auf die Patenterteilung: **15.12.2004**
(21) Anmeldenummer: 02100173.0
(22) Anmeldetag: 22.02.2002
(51) Int. Cl.: G02B 21/22, G02B 21/00, G02B 27/14

(54) **Optisches Instrument bzw. Gerät mit einem binokularen Einblick**
Optical instrument or apparatus for binocular viewing
Instrument ou dispositif binoculaire

(30) Priorität: 23.02.2001 DE 10108988
(43) Veröffentlichungstag der Anmeldung: 04.09.2002
(73) Patentinhaber: Leica Microsystems Schweiz AG, 9435 Heerbrugg (CH)
(72) Erfinder: Déverin, Jacques, Dr., 9443, Widnau (CH)
(74) Vertreter: Reichert, Werner F., Dr.

(56) Entgegenhaltungen:
- EP-A- 0 712 600
- WO-A-00/68724
- DE-A- 3 432 635
- US-A- 3 173 984

## Beschreibung

Die Erfindung bezieht sich auf ein optisches Instrument bzw. Gerät mit mindestens einem binokularen Einblick gemäß dem Oberbegriff des Patentanspruchs 1.

Beispielsweise bei Mikroskopen und insbesondere bei Stereo-Mikroskopen wird es häufig gewünscht, in den einen Binokularkanal bzw. Stereokanal Daten und/oder Bilder einzuspiegeln und an den anderen Binokularkanal bzw. Stereokanal eine Aufnahmeeinrichtung, wie einen Fotoapparat oder eine Videoeinheit, anzuschließen, die das Mikroskopbild, also beispielsweise ein Präparatbild oder bei einem Operationsmikroskop die Operationsstelle aufnimmt.

Es ist bekannt, bei einem optischen Instrument oder Gerät mit wenigstens einem binokularen Einblick, wie beispielsweise einem Stereo-Mikroskop, in den beiden Kanälen des Binokularstrahlenganges Strahlteiler vorzusehen, die das Ausspiegeln eines Teils des Strahlenganges auf die Aufnahmeeinrichtung oder dgl. und/oder das Einspiegeln von bereitgestellten Daten bzw. Bildern in Richtung auf den Einblick ermöglichen.

Viele Anwender stellen nun die Forderung, frei wählen zu können, ob die Einspiegelung in oder der Anschluss der Aufnahmeeinrichtung an den linken oder rechten Kanal erfolgt. Häufig wird sogar gewünscht, während des laufenden Betriebs ändern zu können, an welchen Kanal welche Einrichtung angeschlossen ist.

Beim Stand der Technik sind deshalb sowohl die Aufnahmeeinrichtung als auch die Anzeigeeinrichtung, die die Daten bzw. Bilder bereitstellt, die eingespiegelt werden sollen, als Module ausgebildet, so dass sie wahlweise an den linken oder an den rechten Stereokanal angeflanscht werden können. Der Seitenwechsel von Modulen ist jedoch lästig; zudem besteht die Gefahr von Verwechslungen. Darüber hinaus ist der Platz- bzw. Volumenbedarf aufgrund der notwendigen freien Zugänglichkeit der einzelnen Module sehr groß.

Der Erfindung liegt die Aufgabe zu Grunde, ein optisches Instrument oder Gerät mit wenigstens einem binokularen Einblick gemäß dem Oberbegriff des Patentanspruchs 1 derart weiterzubilden, dass ein Wechsel des Kanals, in den die Einspiegelung von Daten und/oder Bildern erfolgt, oder aus dem ein Teil des Strahlenganges auf ein Aufnahmemodul ausgespiegelt wird, möglich ist, ohne dass Module oder dergleichen umgesteckt bzw. umgesetzt werden müssten.

Eine erfindungsgemäße Lösung dieser Aufgabe ist im Patentanspruch 1 angegeben. Weiterbildungen der Erfindung sind Gegenstand der Ansprüche 2 folgende.

Erfindungsgemäß sind das oder die Module ortsfest angeordnet. Um die einzelnen Module mit dem jeweils gewünschten Kanal des Binokularstrahlengangs - der nicht notwendigerweise, aber bevorzugt ein Stereo-Strahlengang ist - optisch zu verbinden, ist für jedes Modul (wenigstens) ein optischer Umschalter vorgesehen, der das jeweilige Modul mit dem Strahlteiler in dem einen oder dem anderen Kanal optisch verbindet, d.h. einen optischen Weg herstellt. Optional kann der optische Umschalter auch eine Stellung haben, in der er keine Verbindung zwischen dem jeweiligen Modul und einem der Kanäle des binokularen Strahlenganges herstellt.

Dabei ist es bevorzugt, wenn die optischen Umschalter drehbare oder schiebbare Prismen sind. Als Prismen können beispielsweise Rhomboidprismen verwendet werden. Selbstverständlich können aber auch andere "optische Schalter", wie einfache Spiegel oder elektrooptische Elemente eingesetzt werden, sofern diese nur die Funktion haben, einen optischen Weg zwischen dem jeweiligen Modul und dem in dem einen oder dem anderen Kanal vorgesehenen Strahlteiler freizugeben bzw. zu sperren.

Darüber hinaus ist es auch möglich, mehr als einen optischen Umschalter für jedes Modul vorzusehen:

So kann der eine Umschalter, der beispielsweise als Rhomboidprisma ausgebildet ist, je nach seiner Winkelstellung die von dem Anzeigemodul bereitgestellten Daten bzw. Bilder in den linken oder in den rechten Kanal eines Binokulartubus einspiegeln. Der andere Umschalter, der an Stelle des Rhomboidprismas in den Strahlengang eingebracht werden kann, kann beispielsweise so ausgebildet sein, dass er die Daten bzw. Bilder in beide Kanäle einspiegelt. Hierzu kann dieser Umschalter einen Strahlteiler und zwei nachgeordnete Rhomboidprismen aufweisen. Wenn dieser Umschalter in den Strahlengang eingebracht ist, ist es bevorzugt, wenn sich der Umschalter des Aufnahmemoduls in einer Stellung befindet, in der kein Licht aus dem Strahlengang auf das Aufnahmemodul gelenkt wird.

Das erfindungsgemäß ausgestaltete optische Instrument bzw. Gerät hat eine Reihe von Vorteilen:

Da die einzelnen Module nicht während des Betriebs umgesteckt werden müssen, müssen sie nicht in einfacher Weise frei zugänglich angeordnet werden. Vielmehr können sie platzsparend im Inneren des Instruments bzw. Gerät vorgesehen werden. In der Regel ist es auf Grund der erfindungsgemäßen Ausbildung sogar möglich, sie so in dem Gerät anzuordnen, dass sie nur zu Servicezwecken ausgebaut werden müssen. Nur dann, wenn die Module mit mehreren Instrumenten oder Geräten verwendet werden sollen, müssen sie so ausgebildet sein, dass sie leicht vom Gerät bzw. Instrument getrennt werden können.

Verfügt das Instrument bzw. Gerät über mehr als einen binokularen Einblick, so können die einzelnen Module auch für unterschiedliche binokulare Strahlengänge oder sogar gleichzeitig für zwei oder mehr binokulare Strahlengänge genutzt werden. Bezüglich der Instrumente bzw. Geräte mit mehr als einem binokularen Einblick wird exemplarisch auf die US 4,138,191 und den auf dem Deckblatt dieser Druckschrift angegebenen Stand der Technik verwiesen. Beispielsweise ist es möglich, eine Anzeigeeinheit bzw. ein Anzeigemodul über entsprechende optische Umschalter mit einem beliebigen Kanal der für unterschiedliche Beobachter vorgesehenen Stereo-Strahlengänge oder sogar gleichzeitig mit jeweils einem Kanal der beiden Stereo-Strahlengänge des in der US 4,138,191 beschriebenen Stereo-Operationsmikroskops optisch zu verbinden.

Bei dem erfindungsgemäß ausgebildeten optischen Instrument bzw. Gerät ist es besonders bevorzugt, wenn ein Aufnahmemodul und ein Anzeigemodul vorgesehen sind, die dann wahlweise mit dem linken bzw. rechten Kanal des Binokularstrahlenganges optisch verbunden werden können. Selbstverständlich können aber auch mehr als zwei Module vorgesehen sein. Dabei kann es sich beispielsweise um unterschiedliche Aufnahmemodule - wie einen Fotoapparat und eine Videoeinheit - und/oder um unterschiedliche Anzeigemodule handeln, von denen eines Daten und ein anderes Bilder bereitstellt. Weiterhin können aber auch andere Module - wie beispielsweise Beleuchtungseinheiten oder Lasermodule - zur Markierung und/oder Behandlung bzw. Bearbeitung des Objektfeldes vorgesehen werden.

Wenn gleichzeitig ein Aufnahme- bzw. Aufzeichnungsmodul und ein Anzeigemodul eingesetzt werden, ist es bevorzugt, wenn diese mit unterschiedlichen Strahlengängen des Binokularstrahlenganges optisch verbunden sind, um das Auftreten von Moire-Effekten zu verhindern. In besonders einfacher Weise wird dies erreicht, wenn die optischen Umschalter des Aufzeichnungsmoduls und des Anzeigemoduls derart miteinander mechanisch oder elektronisch gekoppelt sind, dass die beiden Module nicht gleichzeitig mit dem gleichen Strahlengang verbunden werden können. Im Falle von Rhomboidprismen kann dies einfach dadurch geschehen, dass die beiden Prismen - je nach dem Lichtweg in den Prismen - auf der selben Welle angeordnet oder dass beide Prismen-Wellen gegengekoppelt sind.

Weiterhin ist es bevorzugt, wenn die Strahlteiler Strahlteiler-Prismen bzw. Strahlteiler-Würfel sind, die sowohl ein Einspiegeln hin zum Einblick als auch ein Ausspiegeln aus dem Strahlengang erlauben.

Die Strahlteiler sind häufig fester Bestandteil des jeweiligen Kanals; es ist aber auch möglich, die Strahlteiler beispielsweise mit den bewegbaren Prismen zu verbinden oder sogar einstückig mit diesen auszubilden. Hierdurch wird zwar der Aufwand für die Bewegung der Prismen erhöht, diese Ausbildung hat jedoch den Vorteil, dass der Strahlteiler auf das jeweilige Modul abgestimmt sein kann. Beispielsweise ist es im Falle eines Lasermoduls möglich, den Strahlteiler so auszulegen, dass er für die Wellenlänge des Lasers undurchlässig ist, und damit das gesamte Laserlicht auf das Objektfeld umlenkt, so dass kein Laserlicht aus dem Binokulareinblick austreten kann.

Weiterhin ist es auch möglich, das optische Instrument bzw. Gerät so auszubilden, das jeder Kanal mit mehr als einem Modul - in der Regel über unterschiedliche Strahlteiler - optisch verbunden werden kann.

Die Erfindung ist zwar besonders bevorzugt bei Mikroskopen und insbesondere bei Stereomikroskopen einsetzbar, bei denen die Strahlteiler beispielsweise im parallelen Strahlengang zwischen dem Mikroskopobjektiv und der Tubuslinse angeordnet sind. Selbstverständlich ist die Erfindung aber auch bei anderen Instrumenten bzw. Geräten, wie Fernrohren, Lupenbrillen usw. anwendbar, bei denen eine Ausspiegelung bzw. eine Einspiegelung aus bzw. in den Strahlengang möglich ist. Ausdrücklich wird weiter festgehalten, dass der Begriff "binokularer Einblick" nicht notwendigerweise impliziert, dass es sich bei dem Instrument bzw. Gerät um ein Stereo-Instrument bzw. Gerät handelt.

Die Erfindung wird nachstehend anhand von Ausführungsbeispielen unter Bezugnahme auf die Zeichnung näher beschrieben, in der zeigen:
- Fig. 1:: den Strahlverlauf durch die in den binokularen Strahlengang eines Stereo-Mikroskops eingesetzten Strahlteiler-Prismen bzw. -Würfel und
- Fig. 2:: eine Aufsicht auf die in Fig. 1 dargestellten Strahlteiler-Würfel und die zugeordneten optischen Umschalter nach einem erfindungsgemäßen Ausführungsbeispiel.

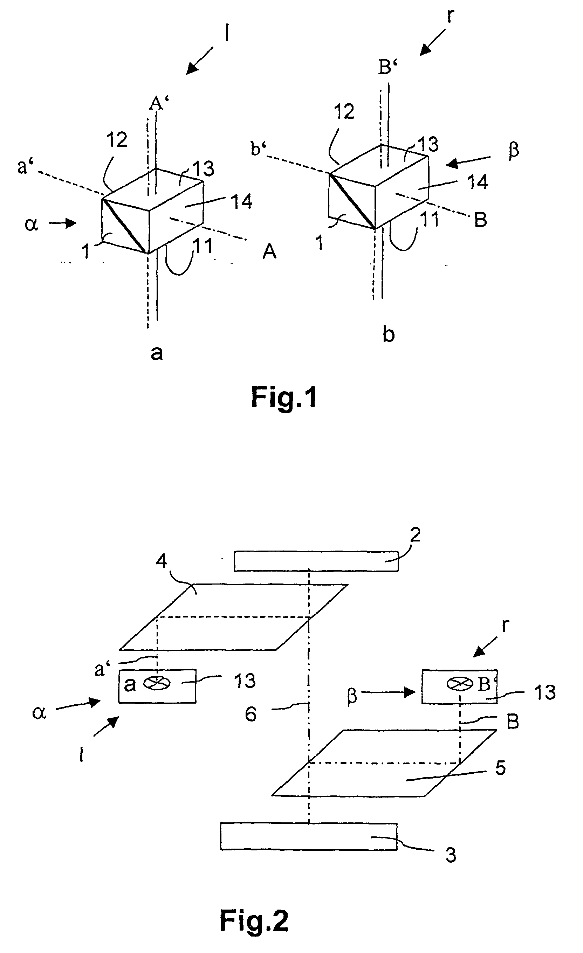

Im Folgenden wird die Erfindung ohne Beschränkung der allgemeinen Anwendbarkeit anhand eines nur teilweise dargestellten Stereo- Mikroskop-Strahlenganges beschrieben. In den Figuren 1 und 2 sind dabei gleiche Teile bzw. Elemente immer mit denselben Bezugszeichen versehen, so dass zumindest teilweise auf eine erneute Vorstellung der einzelnen Teile verzichtet wird.

Fig. 1 zeigt perspektivisch den Strahlverlauf durch die in den binokularen Strahlengang eines Stereo-Mikroskops eingesetzten Strahlteiler-Prismen bzw. -Würfel. Die in den linken Strahlengang I bzw. den rechten Strahlengang r eingesetzten Strahlteiler-Würfel sind mit den Bezugszeichen α bzw. β versehen. Die vom Mikroskopobjektiv kommenden Strahlen a bzw. b (mit einer durchgehenden und gestrichelten Linie dargestellt) treffen auf die in Fig. 1 nicht zu sehende (untere) Ebene 11 der Strahlteiler-Würfel α bzw. β, treten in die Strahlteiler-Würfel ein und werden von der jeweiligen teilreflektierenden Ebene 1 der Strahlteiler-Würfel α bzw. β entsprechend dem durch die Ausbildung bzw. Beschichtung dieser Ebene 1 vorgegebenen Verhältnis - beispielsweise 50 zu 50 - aufgeteilt. Die um 90° umgelenkten Anteile a' oder b' (mit gestrichelten Linien dargestellt) treten durch die in Fig. 1 ebenfalls nicht zu sehende (hintere) Ebene 12 der Strahlteiler-Würfel aus diesen aus und können beispielsweise von einem in Fig. 1 nicht dargestellten Aufnahmemodul - wie einer Videoeinheit oder einem Fotoapparat - aufgenommen werden. Die durch die Ebene 1 durchgehenden Anteile (mit durchgehenden Linien dargestellt) treten aus der jeweiligen (oberen) Ebene 13 der Strahlteiler-Würfel aus und passieren in üblicher Weise ausgebildete, nicht dargestellte Bauelemente des Stereo-Mikroskops und werden dann von einem Betrachter wahrgenommen. Licht, das von einer in Fig. 1 nicht dargestellten Anzeigeeinheit entlang der Strahlengänge A bzw. B (mit strichpunktierten Linien dargestellt) auf die jeweiligen (vorderen) Ebenen 14 der Strahlteiler-Würfel auftrifft, wird ebenfalls von der Ebene 1 aufgeteilt. Der um 90° umgelenkte Anteil A' bzw. B' wird ebenfalls von dem Betrachter wahrgenommen. Der durch die Ebene 1 hindurchgehende Anteil tritt aus der Ebene 12 zusammen mit den Strahlen a' und b' aus. Sofern das vom Mikroskopobjektiv kommende Licht a' bzw. b' von einem Aufnahmemodul aufgenommen werden soll, stören diese Strahlen die Aufnahme. Deshalb werden üblicher Weise nur die aus dem Strahlengang, bei dem keine Einspiegelung erfolgt, ausgespiegelten, vom Mikroskopobjektiv kommenden Lichtstrahlen aufgenommen.

In Fig. 2 ist ein Ausführungsbeispiel der Erfindung dargestellt, das es ermöglicht, in einfacher Weise zu wählen, ob die Einspiegelung in den linken (I) oder den rechten (r) Strahlengang erfolgen soll, und das aus dem anderen Strahlengang austretende Licht mit einem Aufnahmemodul aufzunehmen.

Fig. 2 zeigt eine Aufsicht auf die in Fig. 1 perspektivisch dargestellte Anordnung, d.h. eine Ansicht in Richtung der Flächennormale der Ebene 13. Ein nur schematisch dargestelltes Aufnahmemodul 2 ist auf der einen Seite des Mi k-roskop-Strahlenganges vorgesehen; auf der anderen Seite ist ein ebenfalls nur schematisch dargestelltes Anzeigemodul 3 vorgesehen. Die beiden Module 2 und 3 sind derart angeordnet, dass ihre optischen Ac hsen in der Mitte zwischen den Strahlengängen A und b bzw. a und B verlaufen. Zwei als optische Umschalter dienende Rhomboidprismen 4 und 5 sind zwischen den Strahlteiler-Würfeln α bzw. β und den Modulen 2 bzw. 3 angeordnet. Je nach Stellung der Rhomboidprismen 4 und 5 verbinden diese das Aufnahmemodul 2 mit dem linken Strahlteiler-Würfel α und das Anzeigemodul 3 mit den rechten Strahlteiler-Würfel β (Fig. 2) oder das Aufnahmemodul 2 mit den rechten Strahlteiler-Würfel β und das Anzeigemodul 3 mit dem linken Strahlteiler-Würfel α (nicht dargestellt). Dabei ist es besonders bevorzugt, wenn die beiden Rhomboidprismen 4 und 5 auf einer gemeinsamen Welle 6 (strich-doppelpunktiert dargestellt) angeordnet sind, so dass das Umschalten um 180° immer synchron erfolgt und nie die beiden Module gleichzeitig mit dem selben Kanal verbunden sind. Zu weiteren Einzelheiten wird auf Fig. 2 verwiesen.

### Bezugszeichenliste

- α bzw. β: Strahlteiler-Würfel
- a bzw. b: vom Mikroskopobjektiv kommende Strahlen
- a' oder b': um 90 ° umgelenkte Anteile dieser Strahlen
- A bzw. B: eingespiegelte Strahlen
- A' bzw. B': umgelenkte Strahlen
- I: linker Strahlengang
- r: rechter Strahlengang
- 1: teilreflektierende Ebene
- 11: untere Ebene
- 12: hintere Ebene
- 13: obere Ebene
- 14: vordere Ebene der Strahlteiler-Würfel
- 2: Aufnahmemodul
- 3: Anzeigemodul
- 4,5: Rhomboidprismen
- 6: Welle

## Patentansprüche

1. Optisches Instrument oder Gerät mit Aufnahmemodul und/oder Anzeigemodul mit mindestens einem binokularen Einblick, bei dem in den beiden Kanälen mindestens eines Binokularstrahlenganges mindestens ein Strahlteiler (α, β) vorgesehen pro Kanal ist, der das Ausspiegeln eines Teils des Strahlenganges auf das Aufnahmemodul und/oder das Einspiegeln von vor dem Anzeigemodul bereitgestellten Daten bzw. Bildern in den jeweiligen Kanal in Richtung auf den Einblick ermöglichen, wobei
das oder die Module ortsfest bezogen auf das Instrument bzw. Gerät angeordnet sind, **dadurch gekennzeichnet,**
**dass** für jedes Modul wenigstens ein optischer Umschalter (4, 5) vorgesehen ist, der das jeweilige Modul je nach Stellung des Umschalters wahlweise mit dem Strahlteiler (α, β) in dem einen oder dem anderen Kanal optisch verbindet um so einen Wechsel des Kanals, in dem die Ein- oder Ausspiegelung erfolgt, zu ermöglichen.

2. Instrument bzw. Gerät nach Anspruch 1,
**dadurch gekennzeichnet, dass** die optischen Umschalter drehbare oder schiebbare Prismen sind.

3. Instrument bzw. Gerät nach Anspruch 2,
**dadurch gekennzeichnet, dass** die Prismen Rhomboidprismen sind.

4. Instrument bzw. Gerät nach einem der Ansprüche 1 bis 3,
**dadurch gekennzeichnet, dass** ein Aufnahmemodul und ein Anzeigemodul vorgesehen sind.

5. Instrument bzw. Gerät nach Anspruch 4,
**dadurch gekennzeichnet, dass** das Aufzeichnungsmodul und das Anzeigemodul mit unterschiedlichen Kanälen des Binokularstrahlenganges optisch verbunden sind.

6. Instrument bzw. Gerät nach Anspruch 5,
**dadurch gekennzeichnet, dass** die optischen Umschalter des Aufnahmemoduls und des Anzeigemoduls derart miteinander gekoppelt sind, dass die beiden Module nicht gleichzeitig mit dem selben Kanal verbunden werden können.

7. Instrument bzw. Gerät nach Anspruch 6,
**dadurch gekennzeichnet, dass** die als Prismen ausgebildeten optischen Umschalter des Aufnahmemoduls und des Anzeigemoduls auf der selben Welle angeordnet sind.

8. Instrument bzw. Gerät nach einem der Ansprüche 1 bis 7,
**dadurch gekennzeichnet, dass** die Strahlteiler Strahlteilerprismen bzw. Strahlteilerwürfel sind.

9. Instrument bzw. Gerät nach einem der Ansprüche 1 bis 8,
**dadurch gekennzeichnet, dass** das Instrument ein Mikroskop mit binokularem Einblick und insbesondere ein Stereo- Mikroskop ist.

10. Instrument bzw. Gerät nach Anspruch 9,
**dadurch gekennzeichnet, dass** bei einem Instrument bzw. Gerät mit zwei oder mehr binokularen Einblicken optische Umschalter derart vorgesehen sind, dass die Module mit jedem der einzelnen Kanäle und/oder gleichzeitig mit mehreren Kanälen unterschiedlicher binokularer Einblicke verbunden werden können.

11. Instrument bzw. Gerät nach einem der Ansprüche 1 bis 10,
**dadurch gekennzeichnet, dass** wenigstens zwei optische Umschalter für jedes Modul vorgesehen sind, die unterschiedliche Funktionen haben.

## Claims

1. Optical instrument or device with a recording module and/or display module having at least one binocular viewer, in which at least one beam splitter (α, β) per channel is provided in the two channels of at least one binocular beam path, which makes it possible to extract a part of the beam path onto the recording module and/or to insert data or images provided to the display module into the respective channel in the direction of the viewer, the module or modules being arranged in fixed positions with respect to the instrument or device, **characterized in that** at least one optical switch (4, 5) is provided for each module, which, depending on the setting of the switch, selectively connects the module in question optically to the beam splitter (α, β) in one channel or the other so as to make it possible to change the channel where the insertion or extraction takes place.

2. Instrument or device according to Claim 1, **characterized in that** the optical switches are rotatable or displaceable prisms.

3. Instrument or device according to Claim 2, **characterized in that** the prisms are rhomboid prisms.

4. Instrument or device according to one of Claims 1 to 3, **characterized in that** a recording module and a display module are provided.

5. Instrument or device according to Claim 4, **characterized in that** the recording module and the display module are optically connected to different channels of the binocular beam path.

6. Instrument or device according to Claim 5, **characterized in that** the optical switches of the recording module and of the display module are coupled together in such a way that the two modules cannot be simultaneously connected to the same channel.

7. Instrument or device according to Claim 6, **characterized in that** the optical switches of the recording module and of the display module, which are designed as prisms, are arranged on the same shaft.

8. Instrument or device according to one of Claims 1 to 7, **characterized in that** the beam splitters are beam splitter prisms or beam splitter cubes.

9. Instrument or device according to one of Claims 1 to 8, **characterized in that** the instrument is a microscope with a binocular viewer and, in particular, a stereo microscope.

10. Instrument or device according to Claim 9, **characterized in that** in an instrument or device having two or more binocular viewers, optical switches are provided in such a way that the modules can be connected to each of the individual channels and/or simultaneously to a plurality of channels of different binocular viewers.

11. Instrument or device according to one of Claims 1 to 10, **characterized in that** at least two optical switches, which have different functions, are provided for each module.

## Revendications

1. Instrument ou dispositif optique avec module de prise de vue et/ou module d'affichage avec au moins un binoculaire, dans lequel au moins un séparateur de rayons (α, β) par canal est prévu dans les deux canaux d'au moins un chemin de rayons binoculaire permettant d'extraire par réflexion une partie du chemin des rayons vers le module de prise de vue et/ou d'-injecter par réflexion des données ou des images élaborées par le module d'affichage dans le canal correspondant en direction de l'oculaire, le ou les modules étant disposés à un emplacement fixe par rapport à l'instrument ou dispositif, **caractérisé en ce que** pour chaque module, il est prévu au moins un commutateur optique (4, 5) qui, en fonction de la position du commutateur, relie optiquement au choix le module correspondant avec le séparateur de rayons (α, β) dans l'un ou l'autre des canaux pour permettre ainsi un changement du canal dans lequel a lieu l'injection ou l'extraction par réflexion.

2. Instrument ou dispositif selon la revendication 1, **caractérisé en ce que** les commutateurs optiques sont des prismes rotatifs ou coulissants.

3. Instrument ou dispositif selon la revendication 2, **caractérisé en ce que** les prismes sont des prismes rhomboïdaux.

4. Instrument ou dispositif selon l'une des revendications 1 à 3, **caractérisé en ce qu'**il est prévu un module de prise de vue et un module d'affichage.

5. Instrument ou dispositif selon la revendication 4, **caractérisé en ce que** le module d'enregistrement et le module d'affichage sont optiquement reliés à des canaux différents du chemin de rayons binoculaire.

6. Instrument ou dispositif selon la revendication 5, **caractérisé en ce que** les commutateurs optiques du module de prise de vue et du module d'affichage sont couplés les uns aux autres de telle sorte que les deux modules ne puissent pas être reliés simultanément au même canal.

7. Instrument ou dispositif selon la revendication 6, **caractérisé en ce que** les commutateurs optiques formés sous la forme de prismes du module de prise de vue et du module d'affichage sont disposés sur le même arbre.

8. Instrument ou dispositif selon l'une des revendications 1 à 7, **caractérisé en ce que** les séparateurs de rayons sont des prismes séparateurs de rayons ou des cubes séparateurs de rayons.

9. Instrument ou dispositif selon l'une des revendications 1 à 8, **caractérisé en ce que** l'instrument est un microscope binoculaire et en particulier un microscope stéréoscopique.

10. Instrument ou dispositif selon la revendication 9, **caractérisé en ce que** dans un instrument ou un dispositif avec deux ou plus de binoculaires il est prévu des commutateurs optiques de telle sorte que les modules puissent être reliés à chacun des canaux individuels et/ou simultanément à plusieurs canaux de binoculaires différents.

11. Instrument ou dispositif selon l'une des revendications 1 à 10, **caractérisé en ce qu'**il est prévu au moins deux commutateurs optiques ayant des fonctions différentes pour chaque module.
